# EUROPÄISCHE PATENTSCHRIFT

(11) **EP 0 603 528 B1**
(45) Veröffentlichungstag und Bekanntmachung des Hinweises auf die Patenterteilung: **02.10.1996**
(21) Anmeldenummer: 93118248.9
(22) Anmeldetag: 11.11.1993
(51) Int. Cl.: F16J 15/18

(54) **Stopfbuchspackung**
Stuffing-box packing
Garniture de fresse-étoufe

(30) Priorität: 22.12.1992 DE 4243561
(43) Veröffentlichungstag der Anmeldung: 29.06.1994
(73) Patentinhaber: Richter Chemie-Technik GmbH, D-47906 Kempen (DE)
(72) Erfinder: Hatting, Paul, D-47906 Kempen (DE); Laufs, Bernhard, D-47906 Kempen (DE)
(74) Vertreter: COHAUSZ HASE DAWIDOWICZ & PARTNER

(56) Entgegenhaltungen:
- EP-A- 0 488 551
- US-A- 2 356 947
- US-A- 3 784 214
- US-A- 4 486 002
- US-A- 5 090 087

## Beschreibung

Die Erfindung betrifft eine einstückige Stopfbuchspackung für Schwenk- und Hubarmaturen mit mehreren ringförmigen Dichtflächen, wie sie beispielsweise aus den US-Patenten 23 56 947, 37 84 214 und 44 86 002 bekannt sind.

Muß eine Packung erneuert werden, so ist eine Demontage meistens nur durch einen Packungszieher oder mühsam durch einen Schraubenzieher oder aber ein vergleichbares Werkzeug durchführbar. Diese Werkzeuge führen aber häufig zu einer mechanischen Zerstörung der Ringe und nicht selten zu einer Beschädigung des Packungsinnenraumes.

Aufgabe der Erfindung ist es, eine Stopfbuchspackung der eingangs genannten Art so zu verbessern, daß sie sich leicht entfernen läßt ohne die Packung oder den Packungsinnenraum zu beschädigen.

Diese Aufgabe wird erfindungsgemäß dadurch gelöst, daß an dem dem Armatureninnern abgewandten Ende ein vorstehender Abschnitt angeformt ist, der außerhalb des Abdichtungsbereichs liegt und an dem ein Werkzeug form- und/oder kraftschlüssig befestigbar ist.

Der vorstehende, angeformte Abschnitt ermöglicht es, daß an diesem Vorsprung ein Werkzeug leicht und sicher befestigbar ist, d.h. der Vorsprung kann von einem Werkzeug schnell und einfach ergriffen werden, um die Packung herausziehen zu können. Damit wird auf konstruktiv einfache Weise sichergestellt, daß die Packung demontiert werden kann, ohne Beschädigungen an der Packung oder an der Armatur anzurichten.

Für eine bevorzugte Ausführung wird vorgeschlagen, daß der vorstehende Abschnitt einen geringeren Außendurchmesser aufweist als der Außendurchmesser der Packung. Hierbei kann im Außenmantel des vorstehenden Abschnitts mindestens eine Ausnehmung oder ein Rücksprung angeordnet ist, an dem ein Werkzeug formschlüssig befestigbar ist.

Bei einer vorteilhaften alternativen Ausführung wird vorgeschlagen, daß der vorstehende Abschnitt eine zentrale Ausnehmung aufweist, in deren Innenwand eine Ausnehmung oder ein Rücksprung angeordnet ist, an dem ein Werkzeug formschlüssig befestigbar ist. Besonders vorteilhaft ist bei beiden Ausführungen, daß die Ausnehmung oder der Rücksprung von einer Ringnut gebildet ist.

Ferner ist von größtem Vorteil, wenn der vorstehende Abschnitt ein Flansch ist oder am vorstehenden Abschnitt ein Flansch außen angeformt ist, der eine Abdichtung der Außenseite der Packung und/oder ein Halt für ein Werkzeug ist.

Hierdurch ist der Weg für das Medium am Außendurchmesser der Packung durch einen gesondert abgedichteten flexiblen Kragen am Faltenbalgeinsatz versperrt. Die leichte Demontage ist durch den Kragen gewährleistet.

Das Werkzeug ist innerhalb der Armatur angeordnet, wenn das an dem vorstehenden Abschnitt festzumachende Werkzeug eine Buchse ist, die die Packung pressend beaufschlagt und in der Armatur verbleibend befestigt ist.

Ausführungsbeispiele sind in den Zeichnungen in achsialen Schnitten dargestellt und werden im folgenden näher beschrieben. Es zeigen:
- Figur 1:: Ein erstes Ausführungsbeispiel mit herausgezogener Packung.
- Figur 2:: Das erste Ausführungsbeispiel mit eingesetzter Packung.
- Figur 3:: Ein zweites Ausführungsbeispiel mit seitlichem Kragen.
- Figur 4 und 5 :: Ein drittes Ausführungsbeispiel.

Eine Schwenk- oder Hubarmatur weist außen am Gehäuse einen Gehäusehals 1 auf, in dem die Welle 2 gelagert ist, die das Ventilstellglied, bzw. die Dichtkörper, wie z.B. die Kugel eines Kugelhahns verstellt. Der Hals 1 bildet einen zylindrischen Packungsinnenraum 3, der die Welle 2 koaxial umgibt, so daß zwischen Welle 2 und Innenraum 3 ein im Querschnitt ringförmiger Zwischenraum entsteht, in den eine Stopfbuchspackung 4 einschiebbar ist.

Die Packung 4 besteht aus einem Dichtmaterial insbesondere aus Kunststoff oder Gummi und ist einstückig ausgeführt. Sie hat vorzugsweise die Form eines Faltenbalges oder sie besitzt mehrere ringförmige übereinanderliegende Lamellen, die an der zylindrischen Außenwand der Packung angeformt sind und mit ihren freien Enden an der Welle anliegen.

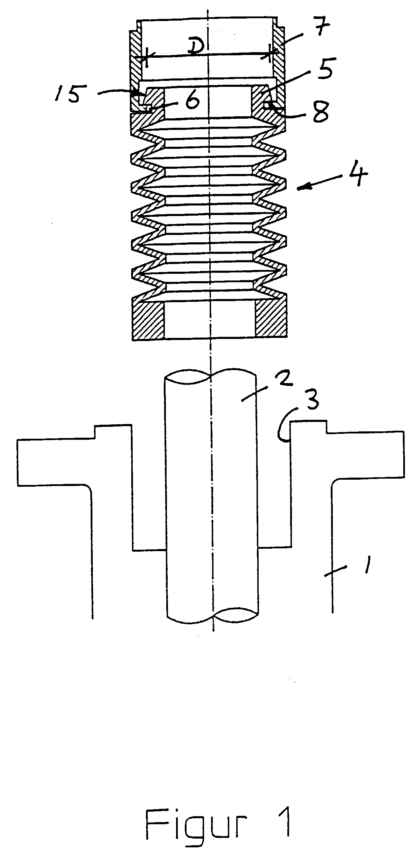

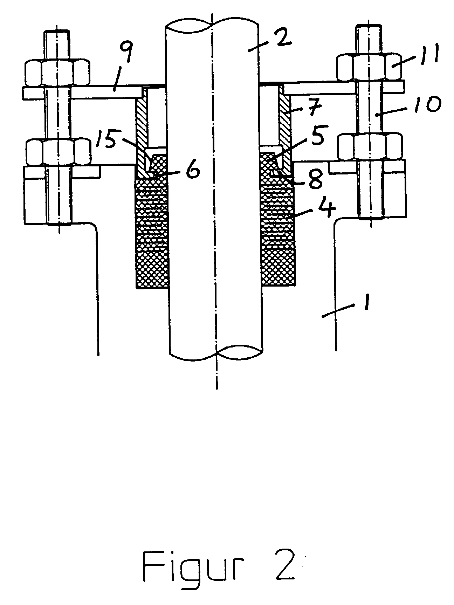

An der Oberseite der einstückigen Packung 4 ist ein vorstehender Abschnitt 5 angeformt, der im Ausführungsbeispiel nach den Figuren 1 und 2 die Form eines Ringes oder einer Hülse besitzt, wobei der Innendurchmesser dieses koaxialen Vorsprungs 5 gleich etwa dem Innendurchmesser der übrigen Packung ist und der Außendurchmesser D kleiner ist als der Außendurchmesser der Packung. Aufgrund dieses geringeren Außendurchmessers kann der Vorsprung 5 durch ein Werkzeug außen ergriffen insbesondere umgriffen werden, um die Packung aus dem Packungsinnenraum 3 herausziehen zu können. Um dem Werkzeug einen besonders sicheren Halt an der Außenseite des Vorsprungs 5 zu geben, kann dieser Vorsprung 5, wie in Figur 1 und 2 dargestellt, in der Außenwand eine koaxiale Ringnut 6 besitzen, die sich nach außen hin öffnet und in der formschlüssig das Werkzeug eingreifen kann. Das Werzeug kann entweder eine Spezialanfertigung sein oder aber auch eine übliche Zange.

Die Außenseite 15 des Vorsprungs 5 ist konisch ausgeführt, wobei sich die Außenseite nach außen hin verjüngt, so daß das Werkzeug auf dieser Außenseite gleiten kann, bis es in die Ausnehmung oder die Nut 6 einschnappt.

Als Spezialwerkzeug ist in den Figuren eine Buchse 7 dargestellt, die an Ihrer Unterseite einen auf der Innenseite vorspringenden koaxialen Ringbereich 8 besitzt, der in der Ringnut 6 formschlüssig einliegt.

Diese Buchse wird zum einen als Werkzeug zum Herausziehen benutzt. Zum anderen wird sie aber in der Armatur belassen als Andruckmittel, das die Packung oben abschließt und von außen aus einen ständigen Druck ausübt. Damit ist die Buchse 7 als oberer Abschluß der Packung ein Element der Armatur, das durch eine Halteplatte 9 festgelegt ist, die durch Schrauben 10 und Muttern 11 festgezogen wird.

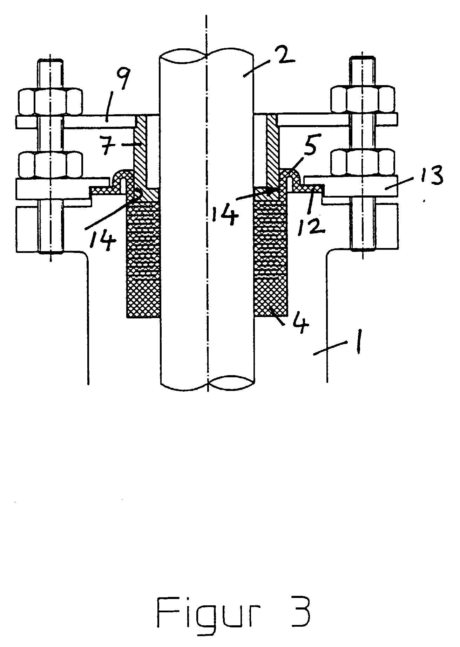

Die Ausführungsbeispiele nach den Figuren 3 bis 5 unterscheiden sich von denen nach Figur 1 und 2 unter anderem dadurch, daß an der Packung außen ein Flansch 12 angeformt ist, der als flexibler Kragen dafür sorgt, daß die Packung am Außenumfang dicht ist, so daß die Packung nicht unbedingt außen Dichtringe besitzen muß. Deshalb weist die Packung in den Ausführungsbeispielen nach den Figuren 3 bis 5 nur nach innen ragende Dichtringe bzw. Dichtlippen auf.

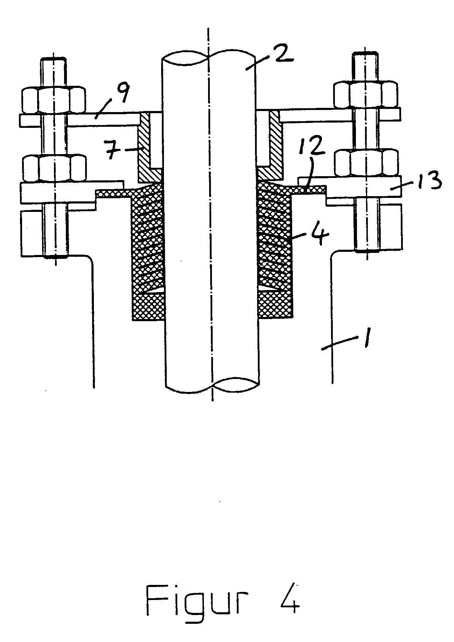

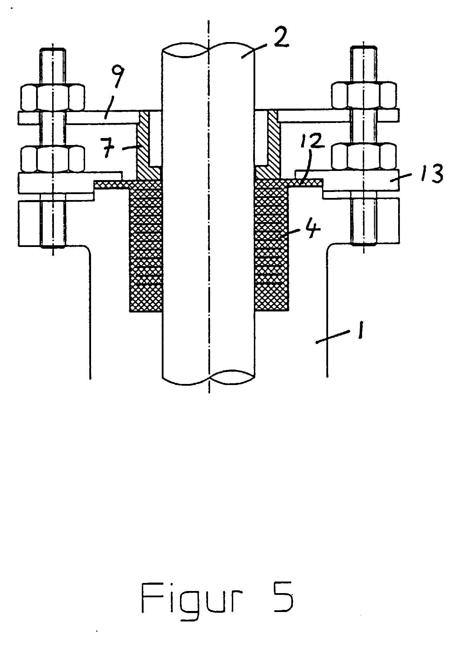

In den Ausführungsbeispielen nach den Figuren 4 und 5 bildet der Flansch 12 den vorstehenden Abschnitt, an den ein Werkzeug zum Herausziehen der Packung sicher eingreifen kann. Dieser Flansch ist durch einen Befestigungsring 13 an die Oberseite des Armaturenhalses 1 festgeklemmt, so daß erst der Ring 13 gelöst, ehe der Flansch 12 durch ein Werkzeug ergriffen wird.

Im Ausführungsbeipiel nach Figur 3 weist der Vorsprung 5 nicht nur außen einen angeformten Flansch auf, sondern er bildet auch eine zentrale Ausnehmung 14, die ringförmig die Welle 2 umgibt und in die ein Werkzeug von oben eingesteckt werden kann. Diese Ausnehmung 14 kann in ihrer Innenwand eine nicht dargestellte ringförmige Ausnehmung oder einen Rücksprung besitzen, um den Halt des Werkzeuges am Vorsprung zu verbessern.

## Patentansprüche

1. Einstückige Stopfbuchspackung (4) für Schwenk- und Hubarmaturen mit mehreren ringförmigen Dichtflächen, **dadurch gekennzeichnet,** daß an dem dem Armatureninnern abgewandten Ende ein vorstehender Abschnitt (5, 12) angeformt ist, der außerhalb des Abdichtungsbereichs liegt und an dem ein Werkzeug (7) form- und/oder kraftschlüssig befestigbar ist.

2. Stopfbuchspackung nach Anspruch 1, **dadurch gekennzeichnet,** daß der vorstehende Abschnitt (5) einen geringeren Außendurchmesser aufweist als der Außendurchmesser der Packung.

3. Stopfbuchspackung nach Anspruch 1 oder 2, **dadurch gekennzeichnet,** daß im Außenmantel des vorstehenden Abschnitts (5) mindestens eine Ausnehmung (6) oder ein Rücksprung angeordnet ist, an dem ein Werkzeug formschlüssig befestigbar ist.

4. Stopfbuchspackung nach einem der vorherigen Ansprüche, **dadurch gekennzeichnet,** daß der vorstehende Abschnitt (5) eine zentrale Ausnehmung (13) aufweist, in deren Innenwand eine Ausnehmung oder ein Rücksprung angeordnet ist, an dem ein Werkzeug formschlüssig befestigbar ist.

5. Stopfbuchspackung nach Anspruch 3 oder 4, **dadurch gekennzeichnet,** daß die Ausnehmung oder der Rücksprung von einer Ringnut gebildet ist.

6. Stopfbuchspackung nach einem der vorherigen Ansprüche, **dadurch gekennzeichnet,** daß der vorstehende Abschnitt ein Flansch (12) ist oder am vorstehenden Abschnitt ein Flansch (12) außen angeformt ist, der eine Abdichtung der Außenseite der Packung und/oder ein Halt für ein Werkzeug ist.

7. Stopfbuchspackung nach einem der vorherigen Ansprüche, **dadurch gekennzeichnet,** daß das an dem vorstehenden Abschnitt (5) festzumachende Werkzeug eine Buchse (7) ist, die die Packung pressend beaufschlagt und in der Armatur verbleibend befestigt ist.

## Claims

1. A one-piece stuffing box packing (4) for pivoting and lifting fittings having a number of annular sealing faces, characterized in that formed at the end remote from the inside of the fitting is a projecting portion (5, 12) which lies outside the sealing zone and to which a tool (7) can be positively and/or non-positively attached.

2. A stuffing box packing according to claim 1, characterized in that the projecting portion (5) has a smaller external diameter than the external diameter of the packing.

3. A stuffing box packing according to claims 1 or 2, characterized in that the external generated surface of the projecting portion (5) is formed with at least one recess (6) or kickback to which a tool can be positively attached.

4. A stuffing box packing according to one of the preceding claims, characterized in that the projecting portion (5) is formed with a central recess (13) whose inside wall is formed with a recess or kickback to which a tool can be positively attached.

5. A stuffing box packing according to claims 3 or 4, characterized in that the recess or kickback is formed by an annular groove.

6. A stuffing box packing according to one of the preceding claims, characterized in that the projecting portion is a flange (12), for a flange (12) is formed on the outside of the projecting portion and forms a seal of the outside of the packing and/or a hold for a tool.

7. A stuffing box packing according to one of the preceding claims, characterized in that the tool (7) to be attached to the projecting portion (5) is a bush which acts with pressure on the packing and is permanently fixed in the fitting.

## Revendications

1. Garniture de presse-étoupe monobloc (4) pour robinetteries pivotantes et coulissantes avec plusieurs surfaces d'étanchéité annulaires,
caractérisé en ce que, à l'extrémité écartée de l'intérieur de la robinetterie est formé un segment saillant (5, 12) qui se trouve en dehors de la zone d'étanchéification et sur lequel un outil (7) peut être fixé à coopération géométrique et/ou adhérence.

2. Garniture de presse-étoupe selon la revendication 1,
caractérisé en ce que le segment saillant (5) présente un diamètre extérieur plus faible que le diamètre extérieur de la garniture.

3. Garniture de presse-étoupe selon la revendication 1 ou 2,
caractérisé en ce que, dans l'enveloppe extérieure du segment saillant (5) est disposé au moins un évidement (6) ou un épaulement sur lequel un outil peut être fixé à coopération géométrique.

4. Garniture de presse-étoupe selon l'une des revendications précédentes,
caractérisé en ce que le segment saillant (5) présente un évidement central (13) dans la paroi intérieur duquel est disposé un évidement ou un épaulement sur lequel un outil peut être fixé à coopération géométrique.

5. Garniture de presse-étoupe selon la revendication 3 ou 4,
caractérisé en ce que l'évidement ou l'épaulement est formé par une rainure annulaire.

6. Garniture de presse-étoupe selon l'une des revendication précédentes,
caractérisé en ce que le segment saillant est une collerette (12) ou qu'une collerette (12) est formée extérieurement sur le segment saillant, qui est une étanchéification du côté extérieur de la garniture et/ou un support pour un outil.

7. Garniture de presse-étoupe selon l'une des revendications précédentes,
caractérisé en ce que l'outil à fixer au segment saillant (5) est une douille (7) qui agit en compression sur la garniture et est fixée à demeure dans la robinetterie.
